# EUROPÄISCHE PATENTSCHRIFT

(11) **EP 1 486 241 B1**
(45) Veröffentlichungstag und Bekanntmachung des Hinweises auf die Patenterteilung: **03.10.2012**
(21) Anmeldenummer: 04011501.6
(22) Anmeldetag: 14.05.2004
(51) Int. Cl.: B01D 33/23

(54) **Verfahren zur Herstellung eines Sektorförmigen Filterelements**
Method for manufacturing a sector-shaped filter element
Procédé de fabrication d'un élément filtrant en forme de secteur

(30) Priorität: 04.06.2003 AT 8662003
(43) Veröffentlichungstag der Anmeldung: 15.12.2004
(73) Patentinhaber: Andritz AG, 8045 Graz (AT)
(72) Erfinder: Scheucher, Peter, Dipl.-Ing.Dr., 8062 Kumberg (AT); Rösler, Johann, Ing., 8046 Graz (AT); Vidonye, Robert, 8075 Hart b.Graz (AT)
(74) Vertreter: Schweinzer, Friedrich

(56) Entgegenhaltungen:
- WO-A-87/04640
- US-A- 3 471 026
- US-A- 4 285 817
- US-A- 4 655 920

## Beschreibung

Die Erfindung betrifft ein Verfahren zum Herstellen eines sektorförmigen Filterelementes für einen Scheibenfilter aus einem wellenförmig vorgeformten Blatt aus einem metallischen Werkstoff, vorzugsweise rostfreiem Stahl.

Scheibenfilter, die aus sektorförmigen Filterelementen bestehen, sind beispielsweise aus der DE-A-42 18 217 bekannt und dienen zum Filtern von Wasser aus einer Faserstoffmischung bei der Papierherstellung. Wenn die sektorförmigen Filterelemente, wie in der DE-A-42 18 217, aus einem wellenförmigen Blatt hergestellt sind, verlaufen die Rippen zueinander parallel, was verschiedene konstruktive und funktionelle Nachteile mit sich bringt. Es sind daher auch sektorförmige Filterelemente bekannt, die, wie aus der US-A 3,471,026 ersichtlich, aus Platten bestehen, an denen strahlenförmig von innen nach außen divergierende Rippen angebracht sind. Derartige Filterelemente weisen aber ein hohes Gewicht auf und sind in der Herstellung teuer. Die US 4,655,920 offenbart einen Scheibenfilter, bei dem die Stützkonstruktion der Filtersektoren durch entsprechend gefaltete Metallbleche gebildet wird.

Der Erfindung liegt daher die Aufgabe zugrunde, ein Herstellungsverfahren für ein gattungsgemäßes sektorförmiges Filterelement zur Verfügung zu stellen, das einfach aufgebaut ist, sowie ein Verfahren anzugeben, mit denen ein derartiges Filterelement einfach und kostengünstig hergestellt werden kann.

Bei diesem Filterelement münden alle Kanäle zwischen den Rippen der wellenförmigen Struktur an der kürzeren inneren Stirnseite, wodurch eine einfache Absaugung des gefilterten Wassers an diesem zentralen, innen liegenden Bereich möglich ist.

Wenn die den Längsrändern des Filterelementes benachbarten Rippen parallel zu den Längsrändern des Segmentes verlaufen, dann kann das wellenförmige Blatt einfach in einem Rahmen, der zur Stabilisierung des Filterelementes und zum Verbinden benachbarter Filterelemente miteinander erforderlich ist, befestigt werden.

Das erfindungsgemäße Verfahren zum Herstellen eines sektorförmigen Filterelementes für einen Scheibenfilter aus einem wellenförmig vorgeformten Blatt aus einem metallischen Werkstoff, vorzugsweise rostfreiem Stahl, ist dadurch gekennzeichnet, dass das Blatt an wenigstens einer Stirnseite gestreckt wird.

Durch dieses Verfahren kann aus einem relativ einfach und günstig herzustellenden Grundkörper, nämlich einem wellenförmig vorgeformten Blatt mit ursprünglich parallel zueinander verlaufenden Rippen, ein erfindungsgemäßes sektorförmiges Filterelement hergestellt werden.

Um dieses Verfahren durchzuführen, wird eine Vorrichtung vorgeschlagen, die durch Klemmbacken für die Längsränder des Filterelementes und einem Antrieb zum Auseinanderziehen der Klemmbacken an wenigstens einer Stirnseite des Filterelementes gekennzeichnet ist.

Das wellenförmig vorgeformte Blatt wird dabei an wenigstens einer Stirnseite auseinandergezogen, wodurch automatisch die endgültige Form des Filterelementes mit den von der kürzeren zu längeren Stirnseite hin strahlenförmig divergierenden Rippen entsteht.

Entsprechend dem erfindungsgemäßen Verfahren kann das Blatt ausgehend von einem im wesentlichen ebenen Zustand vor dem Strecken wellenförmig vorgeformt werden, d.h. die wellenförmige Struktur des Blattes kann in einem Verfahrensschritt unmittelbar vor dem Strecken hergestellt werden. Alternativ ist es natürlich auch möglich, dass das wellenförmig vorgeformte Blatt als Halbzeug angekauft und zum Herstellen des erfindungsgemäßen Filterelementes nur der patentgemäße Verfahrensschritt des Streckens an wenigstens einer Stirnseite ausgeführt wird.

Weitere vorteilhafte Ausführungsformen der Erfindung sind Gegenstand der übrigen Unteransprüche.

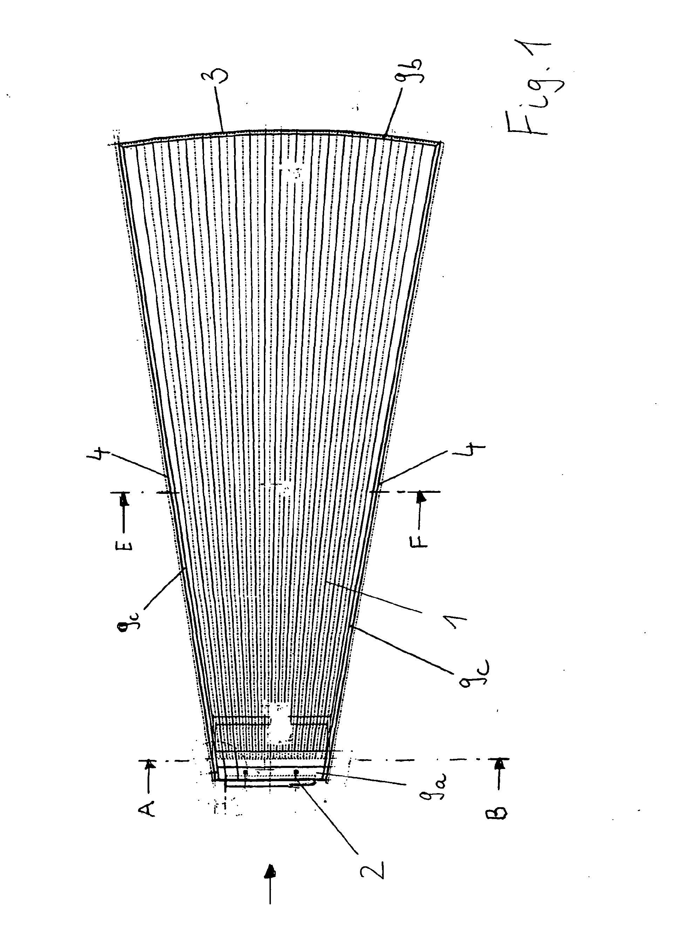

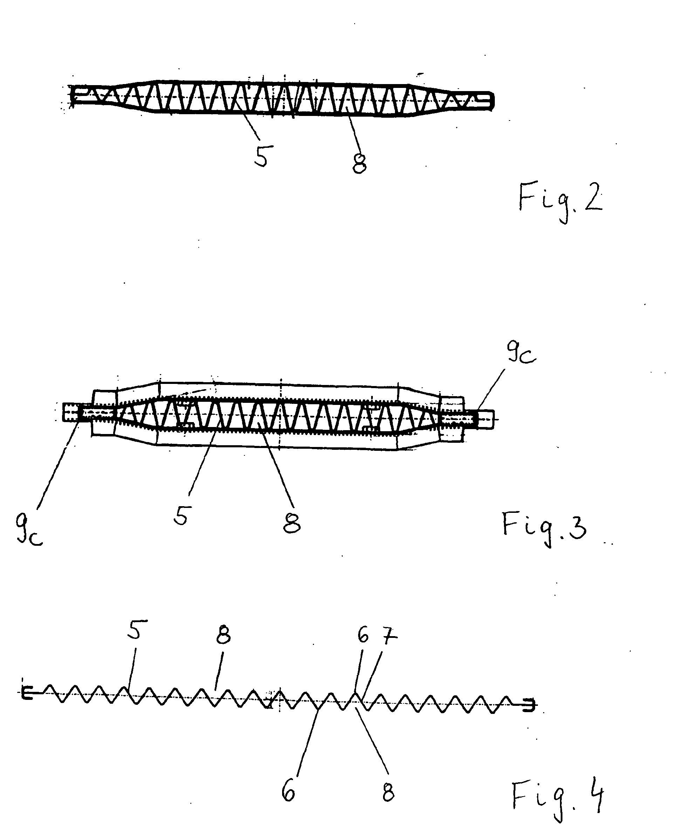

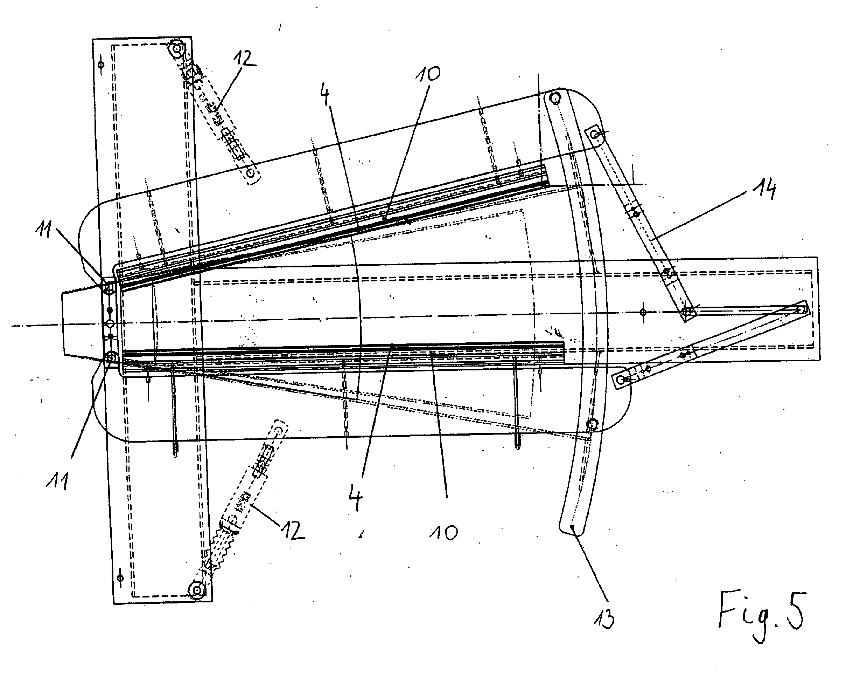

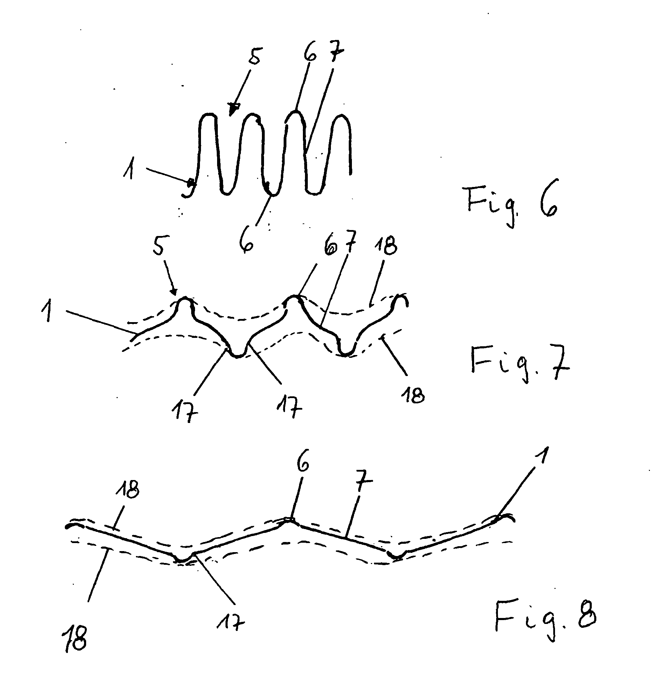

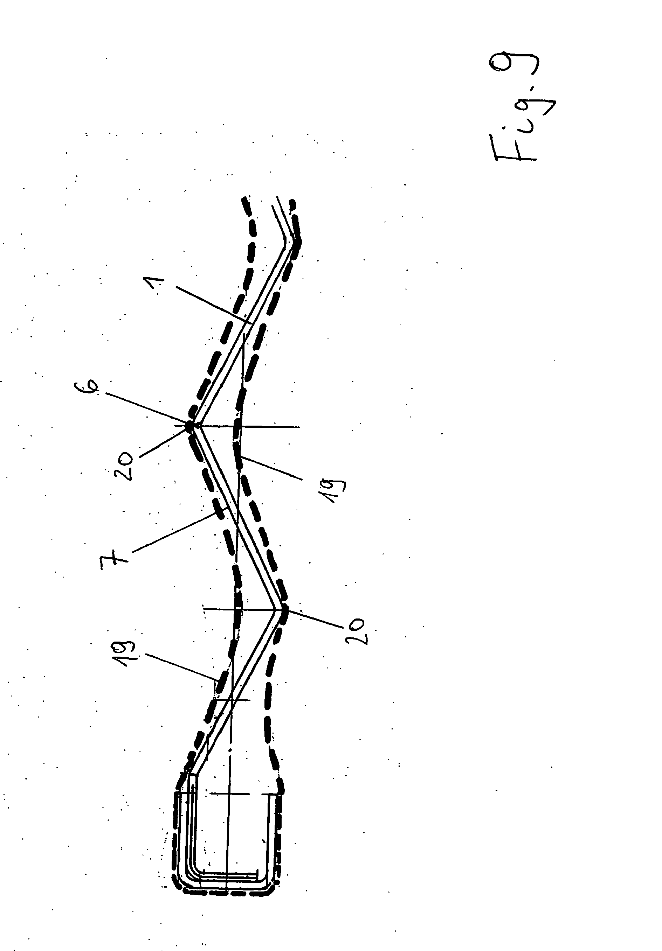

Nachfolgend werden bevorzugte Ausführungsformen der Erfindung unter Bezugnahme auf die beiliegenden Zeichnungen näher erläutert. Es zeigt: Fig. 1 ein erfindungsgemäßes sektorförmiges Filterelement in Draufsicht, Fig. 2 einen Schnitt durch das Filterelement gemäß Fig. 1 entlang der Linie A-B, Fig. 3 eine Ansicht auf das erfindungsgemäße Filterelement von links in Fig. 1, Fig. 4 einen Schnitt durch das Filterelement von Fig. 1 entlang der Linie E-F, Fig. 5 schematisch eine erfindungsgemäße Vorrichtung zum Herstellen eines erfindungsgemäßen Filterelementes, Fig. 6 die Wellenform des Blattes vor dem Strecken, Fig. 7 die Wellenform des Blattes im mittleren gestreckten Zustand, Fig. 8 die Wellenform des Blattes im maximal gestreckten Zustand und Fig. 9 eine Variante mit Metallsieb.

In den Fig. 1 bis 4 ist ein erfindungsgemäßes, sektorförmiges Filterelement dargestellt, das eine innere, kürzere Stirnseite 2, eine äußere, längere Stirnseite 3 und zwei Längsränder 4 aufweist. Das erfindungsgemäße Filterelement besteht aus einem Blatt 1, das eine im wesentlichen wellenförmige Form aufweist, wobei die Rippen 5 der wellenförmigen Struktur von der inneren Stirnseite 2 zur äußeren Stirnseite 3 hin strahlenförmig auseinander divergieren. Die Wellenform des Blattes 1 wird unter anderem durch Scheitelpunkte 6 definiert, zwischen denen im wesentlichen gestreckte Bereiche 7 vorliegen. Die zwischen diesen Rippen 5 gebildeten Kanäle 8 münden alle an der inneren Stirnseite 2 des Filterelementes.

Eingefasst wird das Blatt 1 von einem Rahmen bestehend aus zwei identischen Längsteilen 9c sowie einem Rahmenteil 9a an der inneren Stirnseite 2 und einem Rahmenteil 9b an der äußeren Stirnseite 3. Über die Rahmenteile 9c werden benachbarte sektorförmige Filterelement miteinander verbunden, so dass eine Scheibe entsteht, die im Bereich der inneren Stirnseite 2 an einer nicht dargestellten Welle befestigt wird.

Umhüllt wird das Filterelement des weiteren von einem in den Fig. 1 bis 4 nicht dargestellten Filterbeutel, der das gesamte Filterelement umgibt. Dreht sich ein aus den erfindungsgemäßen Filterelementen zusammengesetzter Scheibenfilter durch eine Suspension, aus der Wasser abgezogen werden soll, werden die Filterelemente über die nicht dargestellte Welle bzw. die innere Stirnseite 2 mit Unterdruck beaufschlagt, so dass Wasser durch den Filterbeutel in die Kanäle 8 durchtritt und radial nach innen zur Stirnseite 2 hin abgesaugt wird.

Zum Herstellen des erfindungsgemäßen Filterelementes nach dem erfindungsgemäßen Verfahren kann die in Fig. 5 schematisch dargestellte erfindungsgemäße Vorrichtung verwendet werden. Diese besteht aus Klemmbacken 10, an denen die Längsränder 4 des ursprünglich rechteckigen, wellenförmig vorgeformten Blattes eingeklemmt werden. Das Festklemmen kann entweder über die gesamte Länge der Klemmbacken 10 oder an ausgewählten diskreten Punkten der Klemmbacken 10 erfolgen. Die Klemmbacken 10 sind an einem Ende an Lagerpunkten 11 verschwenkbar gelagert und werden mittels Hydraulikzylindern 12, die beispielsweise etwa im Mittelbereich der Klemmbacken 10 angreifen, auseinandergezogen, bis sie ausgehend von der Grundstellung die Endstellungen erreicht haben, die in Fig. 5 in strichlierter Linie dargestellt sind und von Anschlägen 13 definiert werden. In einer alternativen Ausführungsform kann anstelle von zwei Hydraulikzylindern 12 auch nur ein einziger Hydraulikzylinder (nicht dargestellt) vorgesehen sein, der an verlängerten Hebelarmen 14 der Klemmbacken 10 befestigt ist.

Grundsätzlich wäre es auch möglich, die Klemmbacken 10 nicht an Lagern 11 ortsfest zu lagern, sondern im Bereich der Enden, die der inneren Stirnseite 2 zugewandt sind, ebenfalls Anschläge vorzusehen, die den Anschlägen 13 entsprechen. Diese Ausführungsform würde ermöglichen, das Blatt 1 auch im Bereich der inneren Stirnseite 2 etwas zu strecken.

Da bei der Erfindung von einem im wesentlichen rechteckförmigen, wellenförmig vorgeformten Blatt mit parallel zueinander verlaufenden Rippen ausgegangen wird, ist die Blattlänge, d.h. die der Wellenkontur folgend gemessene Gesamtlänge des Blattmaterials, an den beiden Stirnseiten 2 und 3 im wesentlichen gleich groß.

Beim Strecken verhält sich das wellenförmig vorgeformte Blatt 1 so wie in den Fig. 6 bis 8 dargestellt. In Fig. 6 ist dabei die ursprüngliche Wellenform dargestellt, wie sie auch an der inneren Stirnseite 2 beibehalten wird, wenn das Blatt an dieser Stirnseite 2 nicht gestreckt wird. Zwischen Scheitelpunkten 6, an denen das Blatt 1 einen definierten Krümmungsradius aufweist, befinden sich im wesentlichen gestreckte Bereiche 7. Während des Streckens verformt sich das Blatt 1 an der äußeren Stirnseite 3 zunächst so, wie in Fig. 7 dargestellt, um schließlich die in Fig. 8 dargestellte gestreckte Form anzunehmen. In diesem Zustand ist die in Fig. 7 dargestellte Form etwa im Mittelbereich zwischen den Stirnseiten 2 und 3 zu finden. Die Fig. 7 und 8 zeigen, dass zwischen den Scheitelpunkten 6 und den dazwischenliegenden, im wesentlichen gestreckten Bereichen 7 S-förmig gekrümmte Bereiche 17 gebildet werden.

Dadurch entstehen Überhöhungen, die die Funktion des erfindungsgemäßen Filterelementes verbessern. Durch den in den Kanälen 8 zwischen Rippen 5 entstehenden Unterdruck beim Absaugen des Wassers wird der in den Fig. 7 und 8 mit strichlierter Linie 18 dargestellte Filterbeutel nach innen, d.h. zur Blattwand, gezogen. Würde er an der Blattwand anliegen, würde er seine Filterwirkung verlieren. Durch die Überhöhungen wird der Filterbeutel 18 aber im wesentlichen parallel zu den gestreckten Bereichen 7 im Abstand von diesen gehalten, so dass er eine größtmögliche Filterfläche bildet, ohne aber am Blatt 1 anzuliegen.

Fig. 9 zeigt eine Variante mit einem Metallsieb 19. Dabei wird ein vorgeformtes Metallsieb 19 eingesetzt, das ähnlich der Kontur 17 der Filterbeutel in Fig. 7 bzw. 8 ausgebildet ist und an den Scheitelpunkten 6 auf dem Blatt 1 aufliegt. Das Metallsieb 19 wird vorzugsweise nur an den Rändern des Rahmens durch Schweißen, Kleben, Klemmen o.ä. befestigt. Durch diese Welligkeit des Metallsiebes 19 wird die Sieboberfläche und damit die Entwässerungsoberfläche um bis zu 25 % vergrößert. Entsprechend steigt dadurch die Entwässerungsleistung des Scheibenfilters. Da die Kanten 20 des Metallsiebes 19 auf den Scheitelpunkten 6 des wellenförmigen Blattes 1 formschlüssig gehalten werden, wird ein Gleiten und damit Verschleißen des Siebes 19 vermieden. Mit der Tiefe der Welle kann bei gleicher Stützkonstruktion das Volumen des Sektors beeinflusst und damit an verschiedene Einsatzbereiche des Scheibenfilters angepasst werden. Durch ein kleineres Volumen ergibt sich dann auch eine geringere Rückbefeuchtung des gebildeten Filterkuchens.
Die Ausführung mit Metallsieb 19 kann auch ohne zusätzlichen Filterbeutel eingesetzt werden.

In einer alternativen Ausführungsform kann bei der Erfindung aber auch vorgesehen sein, dass auf der in Fig. 1 dem Betrachter zugewandten Großfläche des Filterelementes und auf der gegenüberliegenden Großfläche je ein Lochblech befestigt ist, die verhindern, dass der Filterbeutel in die Kanäle 8 nach innen gezogen wird bzw. den Filterbeutel ganz ersetzen.

## Patentansprüche

1. Verfahren zum Herstellen eines sektorförmigen Filterelementes für einen Scheibenfilter aus einem wellenförmig vorgeformten Blatt (1) aus einem metallischen Werkstoff, **dadurch gekennzeichnet, dass** das Blatt (1) an wenigstens einer Stirnseite (3) gestreckt wird.

2. Verfahren nach Anspruch 1, **dadurch gekennzeichnet, dass** das Blatt (1) ausgehend von einem im wesentlichen ebenen Zustand vor dem Strecken wellenförmig vorgeformt wird.

3. Verfahren nach Anspruch 1 oder 2, **dadurch gekennzeichnet, dass** das Blatt (1) während des Streckens an der einen Stirnseite (3) an der anderen Stirnseite (2) festgehalten wird, um ein Strecken an dieser Stirnseite (2) zu verhindern.

4. Verfahren nach Anspruch 1 oder 2, **dadurch gekennzeichnet, dass** das Blatt (1) an den beiden Stirnseiten (2, 3) unterschiedlich weit gestreckt wird.

5. Verfahren nach einem der Ansprüche 1 bis 4, **dadurch gekennzeichnet, dass** das Blatt (1) vor dem Strecken mittels Klemmbacken (10) an den Längsseiten (4) festgeklemmt und anschließend durch Auseinenderziehen der Klemmbacken (10) gestreckt wird.

6. Verfahren nach einem der Ansprüche 1 bis 5, **dadurch gekennzeichnet, dass** auf dem Blatt (1) ein vorgeformtes Metallsieb (19) angebracht wird.

7. Verfahren nach einem der Ansprüche 1 bis 6, **dadurch gekennzeichnet, dass** das wellenförmig vorgeformte Blatt (1) aus rostfreiem Stahl besteht.

## Claims

1. Process for manufacturing a sector-shaped filter element for a disc filter from a pre-corrugated sheet (1) of metallic material, **characterized by** the sheet (1) being stretched, at least at one face end (3).

2. Process according to Claim 1, **characterized by** the sheet (1) beginning more or less flat at first and being pre-shaped into corrugations before being stretched.

3. Process according to Claim 1 or 2, **characterized by** the sheet (1) being held at one face end (2) during stretching at the other face end (3) to prevent stretching at the face end (2) where the sheet is held.

4. Process according to Claim 1 or 2, **characterized by** the sheet (1) being stretched to different widths at both face ends (2, 3).

5. Process according to one of Claims 1 to 4, **characterized by** the sheet (1) being held at the longitudinal sides (4) by clamping jaws (10) before stretching and then stretched by the clamping jaws (10) being pulled apart.

6. Process according to one of Claims 1 to 5, **characterized by** a pre-shaped metal screen (19) being mounted on the sheet (1).

7. Process according to one of Claims 1 to 6, **characterized by** the pre-corrugated sheet (1) being made of stainless steel.

## Revendications

1. Procédé de fabrication d'un élément de filtre sous forme de secteur à partir d'une feuille (1) en matière métallique façonnée suivant une forme ondulée, **caractérisé en ce que** la feuille (1) est étirée au niveau d'au moins un bout (3).

2. Procédé selon la revendication 1, **caractérisé en ce qu'**avant l'étirage, la feuille (1) est façonnée suivant une forme ondulée partant d'un état initial essentiellement plat.

3. Procédé selon la revendication 1 ou 2, **caractérisé en ce que**, pendant son étirage au niveau d'un bout (3), la feuille (1) est fixée sur l'autre bout (2) afin de prévenir l'étirage sur ce bout (2).

4. Procédé selon la revendication 1 ou 2, **caractérisé en ce que** la feuille (1) est étirée à des largeurs différentes au niveau de deux bouts (2, 3).

5. Procédé selon l'une des revendications 1 à 4, **caractérisé en ce qu'**avant l'étirage, la feuille (1) est fixée par des mâchoires (10) montées sur les grands cotés (4) et ensuite étirée en éloignant les dites mâchoires (10).

6. Procédé selon l'une des revendications 1 à 5, **caractérisé en ce qu'**un crible métallique préformé (19) est monté sur la feuille (1).

7. Procédé selon l'une des revendications 1 à 6, **caractérisé en ce que** la feuille (1) façonnée suivant une forme ondulée est en acier inoxydable.
